# EUROPÄISCHE PATENTSCHRIFT

(11) **EP 1 141 538 B1**
(45) Veröffentlichungstag und Bekanntmachung des Hinweises auf die Patenterteilung: **23.11.2005**
(21) Anmeldenummer: 00904824.0
(22) Anmeldetag: 03.01.2000
(51) Int. Cl.: F02M 55/00, F16L 37/14

(54) **LECKAGEANSCHLUSS UND KRAFTSTOFFINJEKTOR MIT EINEM SOLCHEN LECKAGEANSCHLUSS**
LEAKAGE CONNECTION AND FUEL INJECTOR COMPRISING SUCH A LEAKAGE CONNECTION
RACCORD POUR LE RETOUR DE CARBURANT DE FUITE ET INJECTEUR DE CARBURANT PRESENTANT UN TEL RACCORD

(30) Priorität: 08.01.1999 DE 19900508
(43) Veröffentlichungstag der Anmeldung: 10.10.2001
(73) Patentinhaber: SIEMENS AKTIENGESELLSCHAFT, 80333 München (DE)
(72) Erfinder: FRANK, Wilhelm, D-96049 Bamberg (DE); FITZNER, Johannes, D-08060 Zwickau (DE); KLÜGL, Wendelin, D-92358 Seubersdorf (DE); LEWENTZ, Günter, D-93055 Regensburg (DE)
(86) Internationale Anmeldenummer: PCT/DE2000/000027
(87) Internationale Veröffentlichungsnummer: WO 2000/040857

(56) Entgegenhaltungen:
- EP-A- 0 886 065
- DE-A- 1 914 465
- US-A- 5 092 300

## Beschreibung

Die Erfindung betrifft einen Leckageanschluß zum Anbringen einer Leckageleitung an einem Kraftstoffinjektor.

Bei Kraftstoffversorgungssystemen von Brennkraftmaschinen werden zunehmend Speichereinspritzsysteme eingesetzt, bei denen mit sehr hohen Einspritzdrücken gearbeitet wird. Bei diesen Speichereinspritzsystemen wird Kraftstoff mittels einer Hochdruckpumpe in einen Hochdruckspeicher gefördert, von dem aus der Kraftstoff mit Hilfe von Kraftstoffinjektoren in die Brennkammern der Brennkraftmaschine eingespritzt wird. Ein solcher Kraftstoffinjektor weist ein Einspritzventil auf, das hydraulisch von einem Steuerventil mit Hilfe des an den Kraftstoffinjektor angelegten Kraftstoffdrucks geöffnet oder geschlossen wird. Das Steuerventil wird dabei von einem elektrisch angesteuerten Aktor betätigt.

Insbesondere bei dem Steuervorgang durch das Steuerventil tritt ein starker Kraftstoffrückfluß aus dem Kraftstoffinjektor auf, der über eine Leckageleitung, die an einen Leckageanschluß am Kraftstoffinjektor angebracht ist, in einen Kraftstoffvorratsbehälter zurückgeführt wird. Der Leckageanschluß am Kraftstoffinjektor weist dabei im allgemeinen einen Anschlußnippel auf, auf den die Leckageleitung aufgesteckt ist. Um zu verhindern, daß der Anschlußnippel von dem abfließenden Kraftstoff aus dem Kraftstoffinjektor herausgedrückt wird, muß der Anschlußnippel am Kraftstoffinjektor gesichert sein. Bei den im Stand der Technik bekannten Leckageanschlüssen ist ein zusätzlicher Sicherungsaufsatz vorgesehen, der mit dem Kraftstoffinjektor verbunden und in den der Anschlußnippel eingesteckt wird. Dieser Sicherungsaufsatz besitzt eine Innenkontur, die an eine Außenkontur eines unteren Abschnitts des Anschlußnippels angepaßt ist sowie einen Verriegelungsmechanismus, der in den Anschlußnippel eingreift und diesen sicher festhält. Diese Ausführung des LeckageanSchlusses hat den Nachteil, daß mit dem Sicherungsaufsatz ein zusätzliches Bauteil notwendig ist, das aufwendig und präzise gefertigt werden muß, um den Leckageanschluß ausreichend abzudichten und sicher festzuhalten.

Aus der EP 0886065 ist eine Klammer mit zwei wellenförmigen Schenkeln bekannt. Zum Sichern eines Anschlußnippels am Kraftstoffinjektor wird die Klammer in seitliche Schlitze eines Anschlußstutzen des Kraftstoffinjektors geschoben, so daß Einbuchtungen der Schenkel der Klammer in einer Sicherungsposition in eine Ringnut des Anschlußnippels, der in den Anschlußstutzens eingeschoben ist, eingreifen. Bei dieser Ausgestaltung ist eine exakte und damit aufwendige Montage der Klammer notwendig, damit diese mit ihren Einbuchtungen in die Ringnut des Anschlußnippels sitzt. Ferner besteht die Gefahr, daß durch unbeabsichtigtes Anstoßen an die Klammer diese sich aus ihrer Sicherungsposition löst und dadurch den Anschlußnippel freigibt, so daß Kraftstoff aus dem Kraftstoffinjektor austritt. Darüber hinaus ist die Herstellung des Kraftstoffinjektors mit seinen zwei Schlitzen am Anschlußstutzen aufwendig, da Schlitze im Allgemeinen gefräst und entgradet werden müssen.

Aufgabe der vorliegenden Erfindung ist es deshalb, einen Leckageanschluß zum Anbringen einer Leckageleitung an einem Kraftstoffinjektor bereitzustellen, der sich durch einen einfachen Aufbau und eine kostengünstige Herstellung auszeichnet.

Diese Aufgabe wird durch die Merkmale des Anspruchs 1 gelöst.

Gemäß der Erfindung weist ein Leckageanschluß zum Anbringen einer Leckageleitung an einem Kraftstoffinjektor einen Anschlußstutzen auf, der einstückig mit einem Injektorkörper ausgebildet ist; wobei in einer Öffnung im Anschlußstutzen ein Anschlußnippel mit seinem Einsatz eingreift und eine axiale Sicherungseinrichtung im Anschlußstutzen im wesentlichen senkrecht zum Anschlußnippel angeordnet ist und sich in der Endstellung in einer formschlüssigen Verbindung mit dem Anschlußnippel befindet. Durch die Fixierung des Anschlußnippels direkt am einstückig mit dem Injektorkörper ausgebildeten Anschlußstutzen kann auf die Herstellung eines zusätzlichen aufwendigen Sicherungsaufsatzes zwischen dem Anschlußstutzen und dem Anschlußnippel verzichtet werden, wodurch sich ein wesentlicher Kostenspareffekt erzielen läßt. Darüber hinaus läßt sich der erfindungsgemäße Leckageanschluß einfach und schnell montieren.

Bevorzugte Ausführungsformen der Erfindung sind in den abhängigen Ansprüchen angegeben.

Im Folgenden wird die Erfindung anhand der Zeichnungen näher erläutert. Es zeigen
- Fig. 1A: einen Kraftstoffinjektor mit einem Leckageanschluß;
- Fig. 1B: eine schematische Funktionsdarstellung des in Fig. 1A gezeigten Kraftstoffinjektors mit einem Querschnitt durch den Leckageanschlußstutzen;
- Fig. 2A - 2C: eine erste Ausführungsform eines Leckageanschlusses;
- Fig. 3: eine zweite Ausführungsform eines Leckageanschlusses;
- Fig. 4: eine dritte Ausführungsform eines Leckageanschlusses;
- Fig. 5A: und 5B eine vierte Ausführungsform eines Leckageanschlusses; und
- Fig. 6A und 6B: eine fünfte Ausführungsform eines Leckageanschlusses.

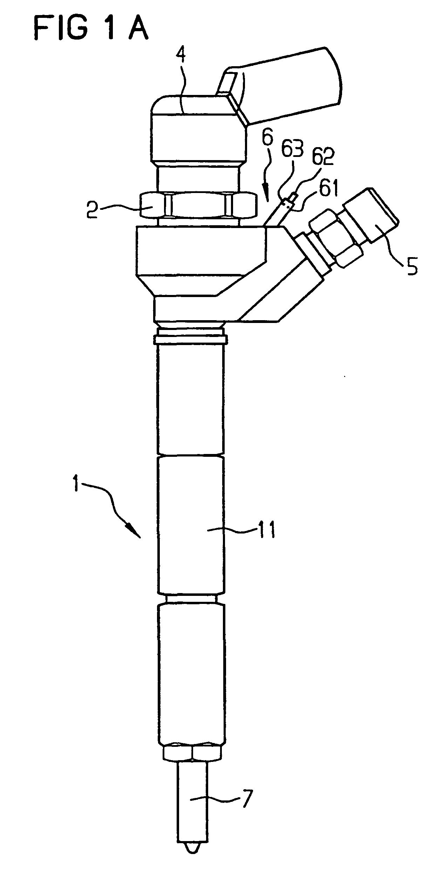

Der in Fig. 1A gezeigte Kraftstoffinjektor 1 setzt sich im wesentlichen aus einem Aktoranschluß 4, einem Stellantrieb 2 und einer Einspritzdüse 7 zusammen, wobei der Stellantrieb 2 und die Einspritzdüse 7 in einem Injektorkörper 11 angeordnet sind. Am Injektorkörper 11 sind weiterhin ein Hochdruckanschluß 5, über den dem Kraftstoffinjektor Kraftstoff unter hohem Druck zugeführt werden kann, sowie ein Leckageanschluß 6, über den überschüssiger Kraftstoff aus dem Kraftstoffinjektor 1 abgeführt werden kann, ausgeführt.

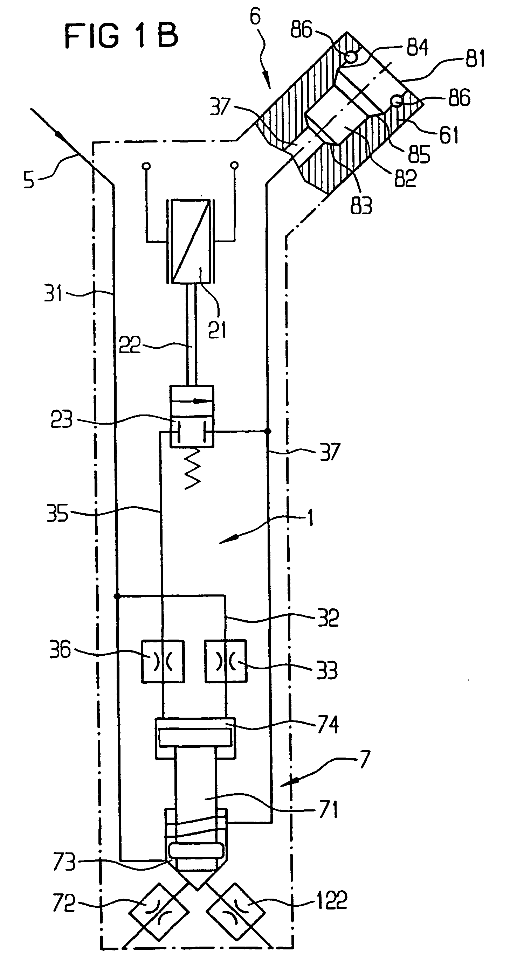

Die Funktionsweise des in Fig. 1A gezeigten Kraftstoffinjektors wird anhand der in Fig. 1B gezeigten Prinzipdarstellung kurz erläutert. Der Kraftstoff wird unter hohem Druck über den Hochdruckanschluß 5 in eine Hochdruckbohrung 31 eingespeist, die mit einer Düsenkammer 73 in Verbindung steht. Von der Hochdruckbohrung 31 zweigt weiterhin eine Zulaufbohrung 32 ab, mit der Kraftstoff über eine Zulaufdrossel 33 in einen Steuerraum 74 der Einspritzdüse 7 eingeleitet wird. Im Steuerraum 74 wirkt der Kraftstoffdruck auf das hintere Ende eines axial beweglichen Düsenkörpers 71. Bei einer Bewegung des Düsenkörpers 71 werden Einspritzlöcher 72 im Injektorkörper 11 geöffnet, die zu einer Brennkammer einer Brennkraftmaschine führen. Die Einspritzlöcher 72 stehen bei geöffnetem Düsenkörper 71 mit der Düsenkammer 73 in Verbindung, so daß Kraftstoff in die Brennkammer der Brennkraftmaschine eingespritzt werden kann.

Wie Fig. 1B weiter zeigt, führt von der Steuerkammer 74 eine Ablaufbohrung 35 über eine Ablaufdrossel 36 zu einem im Injektorkörper 11 integrierten Steuerventil 23. Vom Steuerventil 23 führt wiederum eine drucklose Rücklaufbohrung 37 zum Leckageanschluß 6. Die Rücklaufbohrung 37 ist weiterhin mit der Einspritzdüse 7 verbunden, um überschüssigen Kraftstoff aus der Druckkammer 73 abzuführen. Das Steuerventil 23 wird mit Hilfe eines Ventilstößels 22 von einem elektrischen Aktor 21, die beide ebenfalls Teil des Stellantriebs 2 sind, angesteuert und betätigt.

Das Steuerventil 23 hat die Aufgabe, den Druck zu steuern, der im Steuerraum 74 zum Schließen und Öffnen der Einspritzdüse 7 auf den beweglichen Düsenkörper 71 ausgeübt wird. Ist das Steuerventil 23 geschlossen, steht im Steuerraum 74 im wesentlichen derselbe Systemdruck wie in der Druckkammer 73 an, so daß der Düsenkörper 71 aufgrund der größeren Wirkfläche des Kraftstoffdrucks im Steuerraum 74 nach unten gedrückt wird und die Einspritzlöcher 72 verschließt. Wird der Aktor 21 angesteuert, übt der Ventilstößel 22 eine Kraft auf das federbelastete Steuerventil 23 aus, wodurch sich das Steuerventil 23 öffnet und Kraftstoff über die Rücklaufbohrung 37 und den Leckageanschluß 6 aus dem Kraftstoffinjektor 1 abfließt. Dieser über das Steuerventil 23 abgeleitete Kraftstoff führt an der Zulaufdrossel 33 und der Ablaufdrossel 36 zu einem definierten Druckabfall, wobei die beiden Drosseln so bemessen sind, daß sich der Kraftstoffdruck im Steuerraum 74 verringert. Dadurch sinkt die vom Kraftstoff auf den Düsenkörper 71 im Steuerraum 74 ausgeübte Kraft unter die vom Kraftstoff in der Druckkammer 73 auf den Düsenkörper 71 ausgeübte Kraft ab, so daß sich der Düsenkörper 71 öffnet und Kraftstoff über die Einspritzlöcher 72 in die Brennkammer der Brennkraftmaschine eingespritzt wird.

Der vom Steuerventil 23 beim Steuervorgang abgeführte Kraftstoff wird über den Leckageanschluß 6 aus dem Kraftstoffinjektor 1 abgeleitet. Der Leckageanschluß 6 besteht - wie Fig. 1A zeigt - im wesentlichen aus einem Anschlußstutzen 61, einem Anschlußnippel 62 und einer lösbaren axialen Sicherungseinrichtung 63, die im wesentlichen senkrecht zum Anschlußnippel 62 im Anschlußstutzen 61 angeordnet ist, und sich in einer Endstellung in einer formschlüssigen Verbindung mit dem Anschlußnippel 62 befindet. Der Anschlußstutzen 61 des Leckageanschlusses 6 ist dabei einstückig mit dem Injektorkörper 11 ausgebildet und - wie die Querschnittsdarstellung in Fig. 1B zeigt - mit einer nach außen sich erweiternden Öffnung 81 versehen. Diese Öffnung 81 im Anschlußstutzen 61 weist einen ersten, innen liegenden zylindrischen Öffnungsabschnitt 82 auf, der über einen konisch ausgebildeten Erweiterungsabschnitt 83 mit der Rücklaufbohrung 37 in Verbindung steht. An den inneren Öffnungsabschnitt 82 schließt sich ein weiterer konisch ausgebildeten Erweiterungsabschnitt 85 und ein äußerer zylindrischer Öffnungsabschnitt 84 an. In die Öffnung 81 des Anschlußstutzens 61 greift der Anschlußnippel 62 ein. Im Bereich des äußeren Öffnungsabschnitts 84 sind im wesentlichen senkrecht zur Achse durch die Öffnung 81 zwei weitere, im Querschnitt vorzugsweise runde Bohrungen 86 ausgeführt, die zumindest teilweise in den äußeren Öffnungsabschnitt 84 hineinragen. In diese Bohrungen 86 wird die axiale Sicherungseinrichtung 63 eingeschoben.

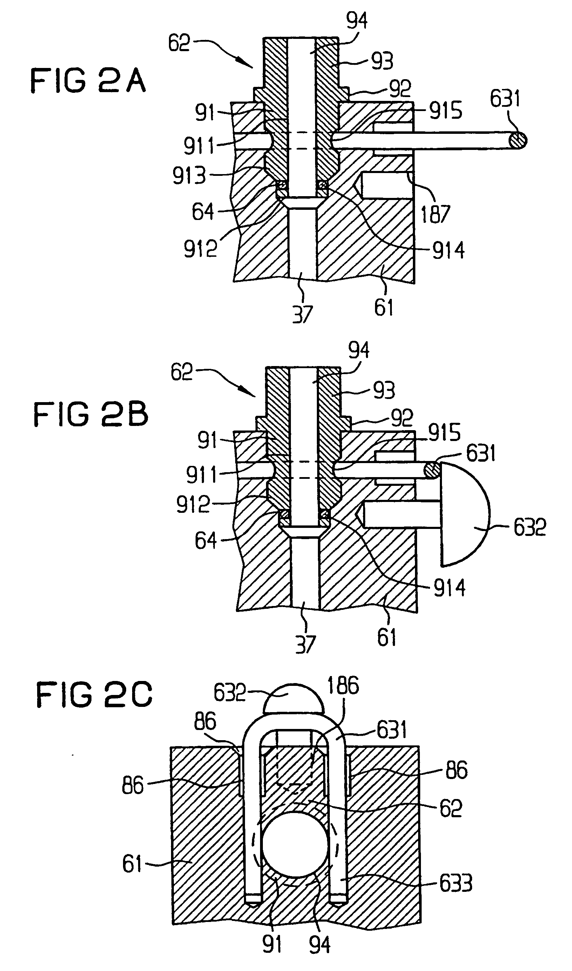

Fig. 2 zeigt eine mögliche Ausführungsform eines Leckageanschlusses. In Fig. 2A und Fig. 2B sind dabei jeweils Längsschnitte und in Fig. 2C ein Querschnitt dargestellt. Der Anschlußnippel 62 besteht im wesentlichen aus einem Einsatz 91, einem Anschlag 92 und einem Aufsatz 93. Weiterhin ist im Anschlußnippel 62 eine durchgehende Innenbohrung 94 vorgesehen, deren Durchmesser vorzugsweise im wesentlichen dem Durchmesser der Rücklaufbohrung 37 entspricht. Die Außenkontur des Einsatzes 91 ist an die Innenkontur der Öffnung 81 angepaßt und setzt sich aus einem oberen zylindrischen Abschnitt 911 und einem unteren zylindrischen Abschnitt 912 zusammen, die über einem konischen Erweiterungsabschnitt 913 miteinander verbunden sind. Wenn, wie in Fig. 2A und Fig. 2B gezeigt ist, der Anschlußnippel 62 in den Anschlußstutzen 61 eingeschoben ist, schlägt der Anschlag 92 an der Stirnfläche des Anschlußstutzens 61 um die Öffnung 81 herum an und der Einsatz 91 erstreckt sich im wesentlichen quer durch die Öffnung 81 im Anschlußstutzen 61 bis zur Rücklaufbohrung 37, wobei die Außenkontur des Einsatzes 91 im wesentlichen an der Innenkontur der Öffnung 81 anliegt. Um zu verhindern, daß zwischen der Außenkontur des Einsatzes 91 und der Innenkontur der Öffnung 81 Kraftstoff austreten kann, ist im unteren Einsatzabschnitt 912 vorzugsweise eine Ringnut 914 ausgebildet, in der ein O-Ringdichtung 64 vorgesehen ist.

Auf den Aufsatz 93 des Anschlußnippels 62 kann eine Leckageleitung, die den Kraftstoffinjektor 1 mit einem Kraftstoffvorratsbehälter verbindet, aufgesteckt werden.

Um zu verhindern, daß der Anschlußnippel 62 aus dem Anschlußstutzen 61 durch den unter Druck stehenden Leckagekraftstoff herausgedrückt wird, steht der Anschlußnippel mit der axialen Sicherungseinrichtung in einer formschlüssigen Verbindung. Diese axiale Sicherungseinrichtung besteht in der in Fig. 2 gezeigten Ausführungsform aus einer U-förmigen Klammer 631 und einer Niete 632. Die Klammer 631 wird - wie Fig. 2A zeigt - mit ihren beiden Schenkeln 633 in die zwei Bohrungen 86 eingeschoben, die quer zur Achse der Öffnung 81 im Anschlußstutzen 61 eingebracht sind. Diese Bohrungen 86 erstrecken sich dabei von einer Außenseite im wesentlichen durch den gesamten Anschlußstutzen 61, wobei sie zumindest teilweise die Öffnung 81 im Anschlußstutzen 61 kreuzen. Im Bereich dieser Kreuzung zwischen den Bohrungen 86 und der Öffnung 81 weist der Anschlußnippel 62 am oberen Einsatzabschnitt 911 eine ringförmig umlaufende Nut 915 auf. Wenn die Klammer 631 in die Bohrungen 86 vollständig eingeschoben ist, greift sie mit ihren beiden Schenkeln 633 in diese Ringnut 915 am Anschlußnippel 62 ein, wodurch der Anschlußnippel 62 gegen eine axiale Verschiebung gesichert ist.

Um zu verhindern, daß die eingeschobene Klammer 631 wieder aus den Bohrungen 86 herausrutscht, wird, wie Fig. 2B zeigt, die Niete 632 in eine Bohrung 186 eingefügt, die parallel gegen die Bohrungen 86 versetzt im Anschlußstutzen 61 eingebracht ist, wobei die Niete 632 dann mit ihrem Nietkopf die eingeschobene Klammer 631 fest. Statt einer Niete kann jedoch auch eine andere Steckverbindung, z.B. eine Schraube, verwendet werden.

Der Leckageanschluß weist einen einfachen Aufbau auf da der Ausschlußnippel 62 direkt am einstückig mit dem Injektorkörper 11 ausgeführten Anschlußstutzen 61 festgehalten wird. Weiterhin ist die als Klammer ausgeformte axiale Sicherungseinrichtung 631 kostengünstig herzustellen und einfach zu montieren.

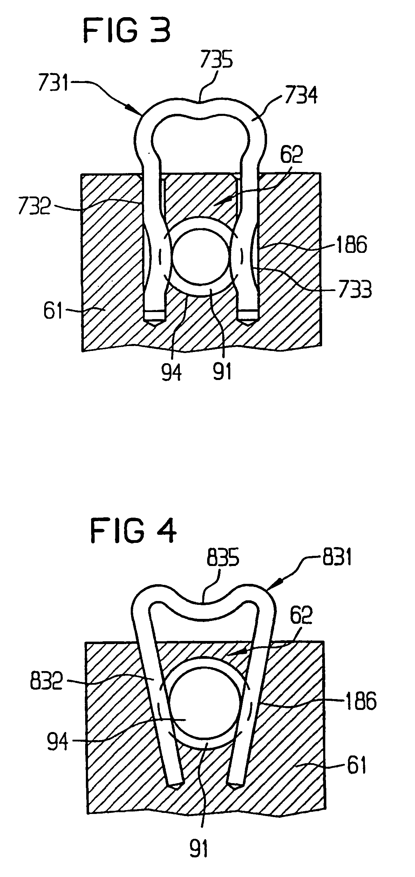

Die Figuren 3 bis 6 zeigen weitere Ausführungsformen des Leckageanschlusses, bei den im Gegensatz zur Ausführungsform in Fig. 2 die axiale Sicherungseinrichtung nur einteilig ausgeführt ist. Bei der in Fig. 3 gezeigten Ausführungsform ist eine Klammer 731 U-förmig ausgestaltet, wobei die beiden Schenkel 732 nach innen vorgespannt sind. Weiterhin weisen die beiden Schenkel 732 der Klammer 731 jeweils eine nach innen gerichtete Einbuchtung 733 auf, die in der eingeschobenen Endstellung der Klammer 731 in die Ringnut 915 am Einsatz 91 des Anschlußnippel 62 eingreifen. Zur Erleichterung des Einschiebens der Klammer 731 ist weiterhin in einem Verbindungssteg 734 der beiden Schenkel 732 eine Einbuchtung 735 vorgesehen. Weiterhin ist der Durchmesser der Bohrungen 86 gegenüber dem Durchmesser der Schenkel 732 der Klammer 731 verbreitert, um ausreichend Platz zum Einschieben der Schenkel 732 mit ihren Einbuchtungen 733 bereitzustellen

Fig. 4 zeigt eine weitere Ausführungsform des Leckageanschlusses, bei dem eine Klammer 831 mit im wesentlichen keilförmig zulaufenden Schenkeln 832 und einem Verbindungssteg 834, der eine Einbuchtung 835 als Einschiebhilfe aufweist, ausgebildet ist. Zur Aufnahme der Schenkel 832 der Klammer 831 sind die Bohrungen 86 schräg im Anschlußstutzen 61 ausgeführt. Bei der Montage müssen die Schenkel 832 der Klammer 831 gespreizt werden, um in die Bohrungen 186 eingefädelt werden zu können. Nach dem Einschieben der Klammer 831 greifen die Schenkel 832 dann in die Ringnut 915 am Einsatz 91 des Anschlußnippels 62 ein, wobei die nach innen vorgespannten Schenkel die Klammer 831 in den Bohrungen 86 des Anschlußstutzens 61 festklemmen.

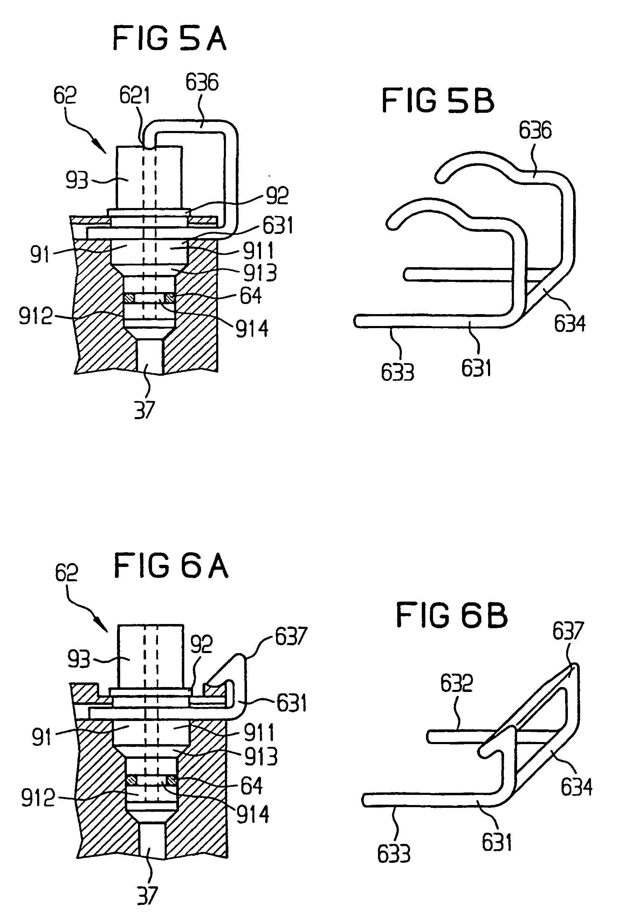

Bei der in Fig. 5A und Fig. 5B gezeigten vierten Ausführungsform weist die U-förmige Klammer 631 im Bereich eines Verbindungsstegs 634 der beiden Schenkel 632 zwei senkrecht von der Klammer nach oben abstehende Einhänghaken 636 auf, die sich, wenn die Klammer 631 vollständig in den Anschlußstutzen 61 eingeschoben ist, im Eingriff mit Aussparungen 917 am Aufsatz 93 des Anschlußnippels 62 befinden. Hierdurch wird die Klammer 631 in ihrer Endstellung, bei der sie sich im Eingriff mit der Ringnut 915 am Einsatz 91 des Anschlußnippels 62 befindet, in ihrer Lage gesichert. Die Sicherung der Klammer 631 über die Einhänghaken 636 ermöglicht eine einfache Montage und insbesondere auch ein leichtes Lösen der Klammer 631, wenn der Anschlußnippel 62 ausgewechselt werden soll.

Fig. 6A und Fig. 6B zeigen eine fünfte Ausführungsform, die weitgehend der in Fig. 5A und Fig. 5B gezeigten entspricht, wobei jedoch ein Einhängbügel 637 so in der Klammer 631 angeordnet ist, daß er sich in der Endstellung der Klammer 631 im Eingriff mit einer am Anschlußstutzen 61 ausgebildeten Aussparung 87 befindet, wodurch die Klammer 631 in ihrer Lage gesichert wird.

Der erfindungsgemäße Leckageanschluß zeichnet sich dadurch aus, daß der Anschlußnippel 62 zum Anbringen der Leckageleitung direkt an einem am Injektorkörper angeformten Anschlußstutzen 61 ohne einen zusätzlichen Sicherungsaufsatz gesichert werden kann. Zur Lagefixierung des Anschlußnippels 62 greift eine quer zur Öffnung 81 im Anschlußstutzen 61 eingeschobene axiale Sicherungseinrichtung 63 in eine Ringnut 915 am Anschlußnippel 62 ein und verhindert ein Herausdrücken des Anschlußnippels 62 durch den aus dem Kraftstoffinjektor 1 abfließenden Leckagekraftstoff.

## Patentansprüche

1. Leckageanschluß zum Anbringen einer Leckageleitung an einem Kraftstoffinjektor (1) mit
einem Anschlußstutzen (61), der einstückig mit einem Injektorkörper (11) ausgebildet ist,
einem Anschlußnippel (62), der mit einem Einsatz (91) in eine Öffnung (81) im Anschlußstutzen eingreift, und
einer axialen Sicherungseinrichtung (63), die im Anschlußstutzen (61) im wesentlichen senkrecht zum Anschlußnippel (62) angeordnet ist und sich in einer Endstellung in einer formschlüssigen Verbindung mit dem Anschlußnippel befindet,
wobei die axiale Sicherungseinrichtung (63) in der Endstellung in eine Nut (915) am Einsatz (91) des Anschlußnippels (62) eingreift,
wobei die axiale Sicherungseinrichtung (63) eine im wesentlichen U-förmige Klammer (631; 731; 831) mit zwei im Wesentlichen geraden Schenkeln aufweist, die in zwei Bohrungen (86) im Anschlußstutzen (61) eingeschoben wird, die im wesentlichen senkrecht zur Öffnung (81) für den Anschlußnippel (62) im Anschlußstutzen (61) angeordnet sind, wobei die beiden Schenkel (633; 732; 832) in der Endstellung der Klammer in die Nut (915) am Einsatz (91) des Anschlußnippels (62) eingreifen,
wobei die axiale Sicherungseinrichtung (63) ein Klemmteil (632) aufweist, die die Klammer (631) am Anschlußstutzen (61) in der Endstellung festhält,
bei dem das Klemmteil (636, 637) einteilig mit der Klammer (631) ausgebildet ist und in der Endstellung der Klammer in eine Aussparung (87) am Anschlußstutzen (61) oder eine Aussparung (917) am Aufsatz (93) des Anschlußnippels (62) eingreift.

2. Kraftstoffinjektor mit einem Leckageanschluß gemäß Anspruch 1.

## Claims

1. Leakage connection for attaching a leakage line to a fuel injector (1) comprising
a connection branch (61) which is embodied as a single piece integral with an injector body (11),
a connection nipple (62) which, with an insert (91), engages in an opening (81) in the connection branch (61), and
an axial securing device (63) which is disposed in the connection branch (61) essentially perpendicularly with respect to the connection nipple (62) and when in a final position has a positive connection with the connection nipple (62),
with the axial securing device (63) engaging, in the final position, in a groove (915) on the insert (91) of the connection nipple (62),
with the axial securing device (63) having an essentially U-shaped clip (631; 731; 831) with two essentially straight arms, said clip being inserted into two holes (86) in the connection branch (61) which are arranged essentially perpendicularly with respect to the opening (81) for the connection nipple (62) in the connection branch (61), the two arms (633; 732; 832) engaging, in the final position of the clip, in the groove (915) on the insert (91) of the connection nipple (62),
with the axial securing device (63) having a clamping part (632) which retains and fixes the clip (631) in the final position on the connection branch (61),
with the clamping part (636, 637) being embodied as a single piece integral with the clip (631) and in the final position of the clip engaging in a recess (87) on the connection branch (61) or a recess (917) on the cap (93) of the connection nipple (62).

2. Fuel injector having a leakage connection according to claim 1.

## Revendications

1. Raccord de fuite destiné à raccorder une conduite de fuite à un injecteur de carburant (1), comprenant
une tubulure de raccord (61) qui est formée en une seule pièce avec un corps d'injecteur (11),
un mamelon de raccord (62) qui s'engage par une partie intérieure (91) dans une ouverture (81) de la tubulure de raccord, et
un dispositif de sécurité axial (63) qui est disposé dans la tubulure de raccord (61) sensiblement perpendiculairement au mamelon de raccord (62) et qui, dans une position finale, se trouve en liaison par conjugaison de formes avec le mamelon de raccord,
dans lequel, dans la position finale, le dispositif de sécurité axial (63) s'engage dans une gorge (915) portée par la partie intérieure (91) du mamelon de raccord (62),
dans lequel le dispositif de sécurité axial (63) présente une pince (631 ; 731 ; 831) sensiblement en forme de U, possédant deux branches sensiblement droites qui sont engagées dans deux perçages (86) de la tubulure de raccord (61), qui sont disposés sensiblement perpendiculairement à l'ouverture (81) destinée à recevoir le mamelon de raccord (62) dans la tubulure de raccord (61), les deux branches (633 ; 732 ; 832) étant engagées dans la gorge (915) de la partie intérieure (91) du mamelon de raccord (62) dans la position finale de la pince,
dans lequel le dispositif de sécurité axial (63) présente une partie de serrage (632) qui maintient la pince (631) sur la tubulure de raccord (61) dans la position finale,
dans lequel la partie de serrage (636, 637) est d'une seule pièce avec la pince (631) et, dans la position finale de la pince, elle est engagée dans un évidement (87) porté par la tubulure de raccord (61), ou dans un évidement (917) du chapeau (93) du mamelon de raccord (62).

2. Injecteur de carburant muni d'un raccord de fuite selon la revendication 1.
